Europäisches Patentamt

European Patent Office

Office européen des brevets

(19)

(11) Publication number: **0 314 177**

**A2**

## (12) EUROPEAN PATENT APPLICATION

(21) Application number: 88118032.7

(51) Int. Cl.⁴: **H04B 1/20**

(22) Date of filing: 28.10.88

(30) Priority: 30.10.87 JP 275355/87

(43) Date of publication of application:
03.05.89 Bulletin 89/18

(84) Designated Contracting States:
DE FR GB

(71) Applicant: NEC HOME ELECTRONICS, LTD.
5-24, Miyahara 3-chome Yodogawa-ku
Osaka-Shi Osaka(JP)

(72) Inventor: Nishio, Masaaki
NEC Home Electronics Ltd. No.5-24,
Miyahara
3-chome Yodogawa-ku Osaka-shi Osaka(JP)

(74) Representative: DIEHL GLAESER HILTL &
PARTNER
Patentanwälte Flüggenstrasse 13
D-8000 München 19(DE)

(54) Transmitter for remote control system and method of remotely controlling a plurality of operations on a plurality of electronic devices.

(57) A transmitter for a remote control system for controlling a plurality of operations on a plurality of electronic devices. An external input unit (18) generates a selection signal in response to a user's manipulation of a plurality of keys (2) thereon and transmits this selection signal to a control unit (30). The control unit (30) by use of a signal processor retrieves information from a correspondence table (4) which links the particular selection signal to a particular operation on a particular electronic device and generates a transmission signal in response thereto. An outputting unit (12) receives the transmission signal and outputs a remote control signal which causes the selected electronic device to perform the selected operation. The transmitter includes a display unit (22) to display a message in response to a display signal generated by the control unit (30).

FIG. 1

# TRANSMITTER FOR REMOTE CONTROL SYSTEM AND METHOD OF REMOTELY CONTROLLING A PLURALITY OF OPERATIONS ON A PLURALITY OF ELECTRONIC DEVICES

The present invention generally relates to a transmitter of a remote control system for use with a TV receiver, a video tape recorder and other associated apparatuses, and more particularly, to a transmitter of a remote control system wherein the user is allowed to modify an array of operation keys for easier operation thereof, as well as to a method of remotely controlling a plurality of operations on a plurality of electronic devices.

In recent years, remote control systems have been incorporated into TV receivers, video tape recorders and so on. The remote control system includes a transmitter for manual use. The receiver of the remote control system is incorporated into the above-described electronic devices. When the user manipulates the operation keys of the transmitter, an optical signal corresponding to the manipulation is sent from the transmitter, to the receiver. In this way, a power source, a channel selection unit, a sound volume unit and other adjusting units are adjustably controlled. The transmitter of such a remote control system is typically composed of operation keys, a transmission code generating means for generating the transmission codes of information corresponding to the operation keys by pushing down the keys and outputting means for outputting the transmission codes from the transmission code generating means to the outside.

In general, the thus constructed remote control systems are provided to exhibit one-to-one correspondence to the above-described electronic devices. For instance, if there are three units such as, a TV receiver, a video tape recorder and a laser disc player, three remote control systems are needed correspondingly. The arrangement, which requires as many as three transmitters, is inconvenient for the user who has to operate each of transmitters by holding them one after another.

To cope with this defect, it has been proposed that all the electronic units be operated by a single transmitter of the remote control system.

A system in which the transmitter incorporates the operation keys for all the electronic devices has been proposed, however, the configuration of the transmitter increases resulting in difficulty of operation.

A system in which the transmitter utilizes double-purposed keys has also been proposed but in this system a plurality of keys must be simultaneously manipulated resulting in difficulty in operating the keys.

A system in which the transmitter employs some keys for operating specific electronic devices has also been proposed, however, each owner requires different keys so that a transmitter which is convenient for one user may be inconvenient for another user.

Recently, there has been proposed a transmitter of a first remote control system, having an arrangement such that transmission data of the transmitter of a second remote control system can be stored thereon after effecting a sampling process, so that the transmission data of the second system as well as the transmission data of the first remote control system can be transmitted. In this type of transmitter, however, transmission data to be transmitted is confined to the data of the operation keys provided in the first transmitter so that it is impossible to transmit data of other operation keys designed for other transmitters.

Besides, in all the transmitters of the above-mentioned conventional remote control systems, the arrays of the operation keys are all determined on the part of the markers so that it is impossible to modify the array of keys in accordance with the user's choice.

It is an object of the present invention to provide a transmitter of a remote control system which permits the user to freely modify the array of keys so that the transmitter can control various electronic units. This object is solved by the transmitter of claim 1. Further advantageous features of the transmitter are evident from the dependent claims 2 to 10.

It is a further object of the present invention to provide a method of remotely controlling a plurality of operations on a plurality of electronic devices. This object is solved by the method of independent claim 11. Further advantageous features of this method are evident from dependent claims 12 to 16.

The present invention provides a transmitter of a remote control system, including: transmission code generating means for generating transmission codes of information corresponding to operation keys said codes being generated by pushing down the operation keys; and outputting means for outputting the transmission code from the transmission code generating means to the outside; a correspondence table for making a physical position of the operation key correspond to the information of the operation keys in the physical position; signal processing means for imparting both the physical position when pushing down the operation keys and the information of the operation keys which has been obtained from the correspondence table to the transmission code generating means as operation key correspondence information; and program mode processing means for modifying a correspondence relation of the correspondence table on the basis of data transmitted from an external inputting unit including the operation keys in a predetermined program mode provided in conformity with a command from a command inputting unit for issuing a program mode command.

In the thus constructed transmitter according to the present invention, when transmitting a normal control signal, the operation keys are first pushed down. The information corresponding to the operation keys, which is obtained from the correspondence table, is imparted to the signal processing means. In accordance with the present invention, where the array of operation keys is to be varied, the program mode processing means is set in the associated program mode by the program mode command from the command inputting unit. At this time, the data on the modification of key position or on the modification of key information is inputted from the external inputting unit including the operation keys, whereby a correspondence relation of the correspondence table can be varied on the basis of the thus inputted data. In accordance with the present invention, whereby a plurality of electronic units are to be controlled by a single piece of operation key, the program mode processing means is set in the associated program mode by issuing a program mode command from the command inputting unit. The subsequent step is to modify the operation key correspondence information within the correspondence table which corresponds to the single operation key by inputting the control data for controlling a variety of apparatuses from the external inputting unit including the operation keys. As a result, it is feasible to modify a correspondence relation of the correspondence table.

As explained earlier, according to the present invention, the user is allowed to modify the array of operation keys for easier operation thereof, and the plurality of electronic units can be controlled by a single operation key. Hence, this facilitates the use of the transmitter and contributes to the miniaturization in configuration of the transmitter in spite of the fact that a plurality of electronic units can be controlled. Further details and advantages of the transmitter of the invention will become evident from the following description of the enclosed drawings.

FIG 1 is a block diagram illustrating a first embodiment of a transmitter of a remote control system according to the present invention;

FIG. 2 is an diagram showing the correspondence table used in the first embodiment of the present invention;

FIG. 3 is a block diagram illustrating a device by which the first embodiment of FIG. 1 is actualized;

FIG. 4 is a perspective view illustrating the first embodiment of the present invention;

FIG. 5 is a plan view illustrating the first embodiment of the present invention;

FIG. 6 is an flowchart showing the fundamental function of the first embodiment of the present invention;

FIG. 7 is a flowchart showing processes of controlling the operations of plurality of electronic devices by manipulating a single operation key in the first embodiment of the present invention;

FIG. 8 is an diagram showing variations in display on a display unit in connection with the operations shown in FIG. 7;

FIG. 9 is a flowchart showing a key array modifying operation 1 in the first embodiment of the present invention;

FIG. 10 is an diagram showing the variations in display on the display unit in connection with the operations of FIG. 9;

FIG. 11 is a flowchart showing another key array modifying operation 2 in the first embodiment of the present invention;

FIG. 12 is an diagram illustrating the variations in display on the display unit in connection with the operations of FIG. 11;

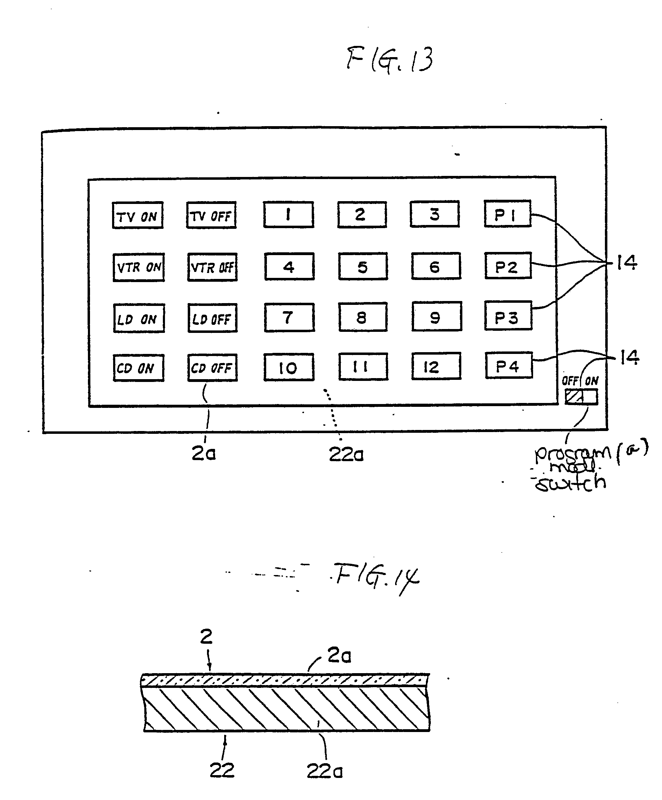

FIG. 13 is a plan view depicting a second embodiment of the present invention;

FIG. 14 is a sectional view illustrating the second embodiment of the present invention;

FIG. 15 is a flowchart showing one-key operations in the second embodiment of the present invention;

FIG. 16 is an diagram showing the variations in display on the display unit in connection with the operations of the flowchart of FIG. 15;

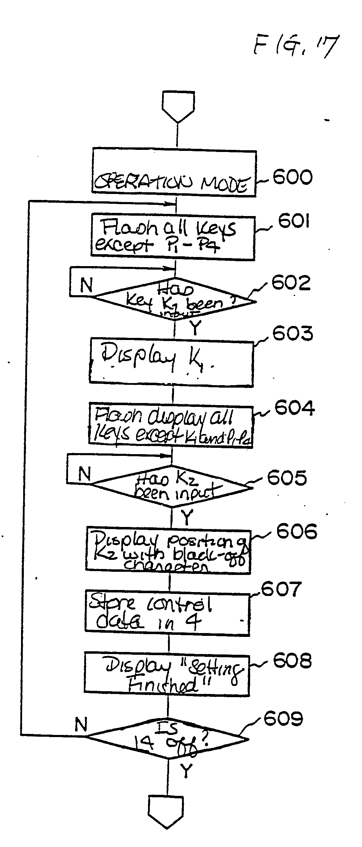

FIG. 17 is an flowchart showing the key array modifying operation 1 in the second embodiment;

FIG. 18 is an diagram showing the variations in display on the display unit in connection with the operations of the flowchart of FIG. 17; and

FIG. 19 is a block diagram illustrating a third embodiment of the present invention.

The preferred embodiments of the present invention will hereinafter be described with reference to the accompanying figures wherein like numerals represent like parts throughout.

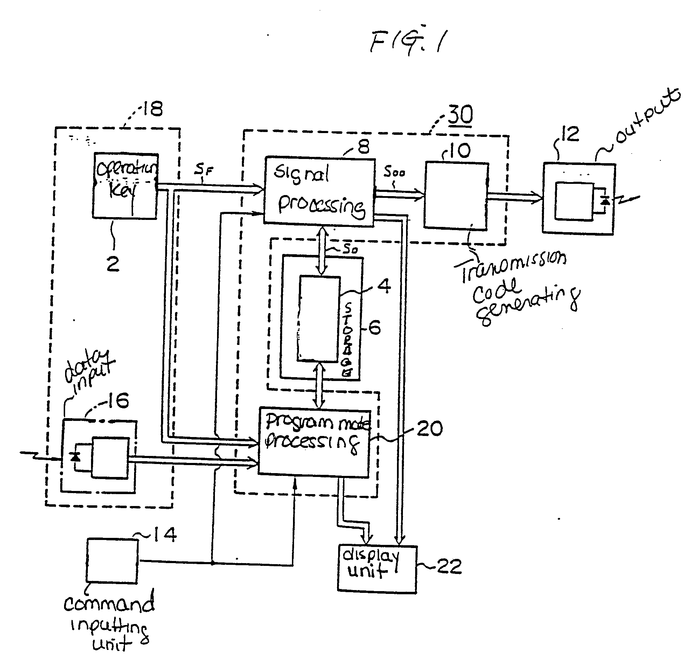

The transmitter in the embodiment depicted in of FIG. 1 includes a storage device 6 for storing a correspondence table stores information which corresponds to the position of operation keys 2. A signal processing means 8 outputs, as a portion of operation key correspondence information $S_{DD}$,

both information SF regarding physical position of the operation keys 2 and a piece of information $S_D$ corresponding to this physical position of the operation keys 2 which is obtained from the correspondence table 4 of the storage device 6. Transmission code generating means 10 generates transmission codes of the operation key correspondence information $S_{DD}$ outputted from the signal processing means 8. Output unit 12 outputs the transmission codes coming from the transmission codes generating means 10 to the outside. A command input unit 14 issues a program mode command. An external input unit 18 which includes the operation keys 2 and a data input circuit 16 is set in a predetermined program mode provided in conformity with the command issued from the command input unit 14. Program mode processing means 20 modifies the correspondence relation of the correspondence table 4 on the basis of data sent from the external input unit 18. A display unit 22 is display-controlled by the signal processing means 8 and the program mode processing means 20. A control unit 30 includes the signal processing means 8, the transmission code generating means 10 and program mode processing means 20.

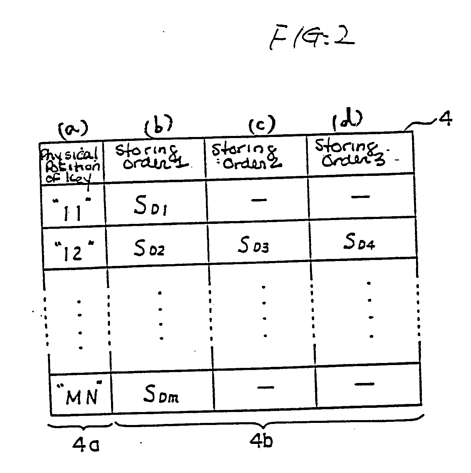

The correspondence table 4 employed in the transmitter of the remote control system is, as illustrated in FIG. 2, formed of key position information addresses 4a having one-to-one correspondence to the physical positions (defined by, e.g., a column M of keys and a row N of keys) of the operation keys 2 and of pieces of coded information $S_D$ of the operation keys 2 which are to be stored in sequence, corresponding to the key position information addresses 4a.

The transmitter of the remote control system is constructed in the following manner. To be specific, the operation keys 2 are connected to the control unit 30 to which the data inputting circuit is linked. The operation keys 2 and the data input circuit 16 are combined to constitute external input unit 18. The data input circuit 16 includes an input circuit 16b for receiving a signal from a light receiving diode 16a and shaping a waveform thereof to obtain a predetermined signal. This input circuit 16b further supplies this signal to the control unit 30 to which the output means 12 is connected. The output means 12 is so arranged that a light emitting diode 12b is caused to emit infrared-rays in response to a signal transmitted from an output circuit 12a for amplifying and output the transmission codes sent from the control unit 30, thereby output an optical signal. The control unit 30 is further connected to the display unit 22 and to the storage device 6. Stored in this storage device 6 is a program for permitting a CPU of the control unit to function.

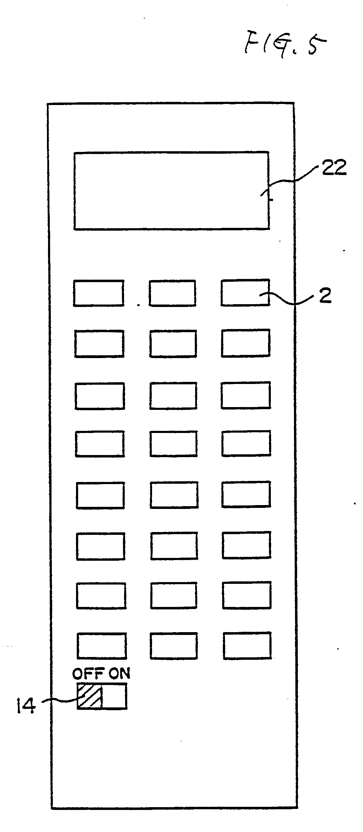

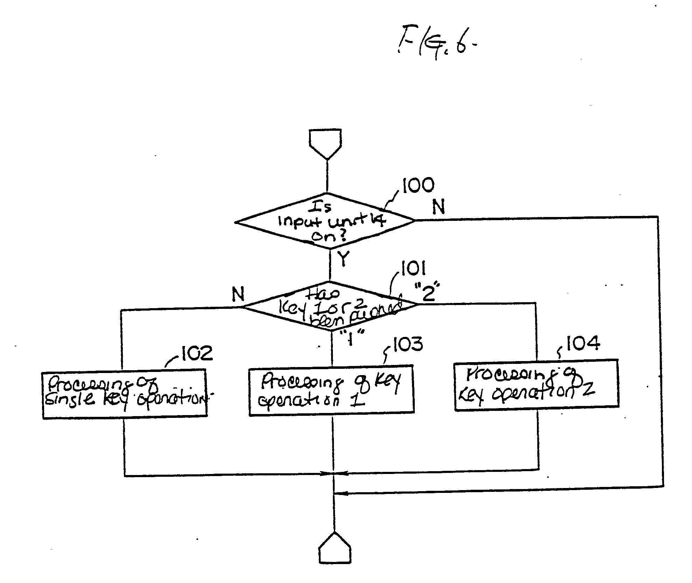

Referring to FIGS. 4 and 5, the transmitter of the remote control system has a thin rectangular configuration and has its surface provided with the operations keys, the display unit 22 and a switch of the command inputting unit 14. One side surface of the transmitter is formed with a window 26 for admitting the optical signal to the light receiving diode 16a of the data input circuit 16 and with a window 28 for output the optical signal from the light emitting diode 12b of the output means 12 to the outside.

The description will now focus on the function of the embodiment having the foregoing constitution.

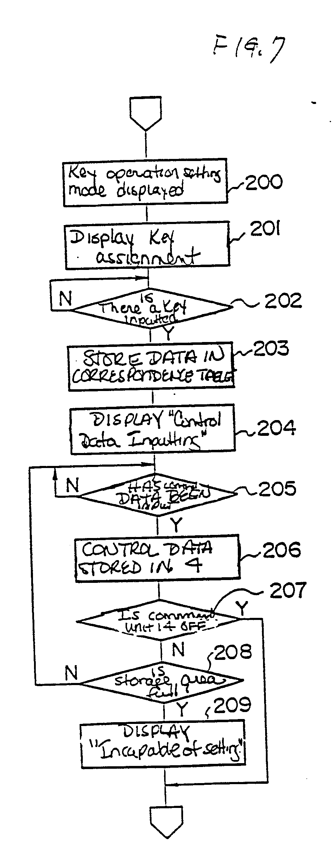

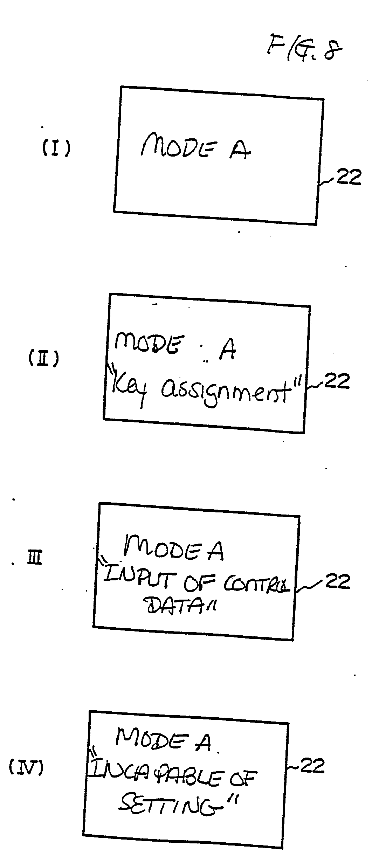

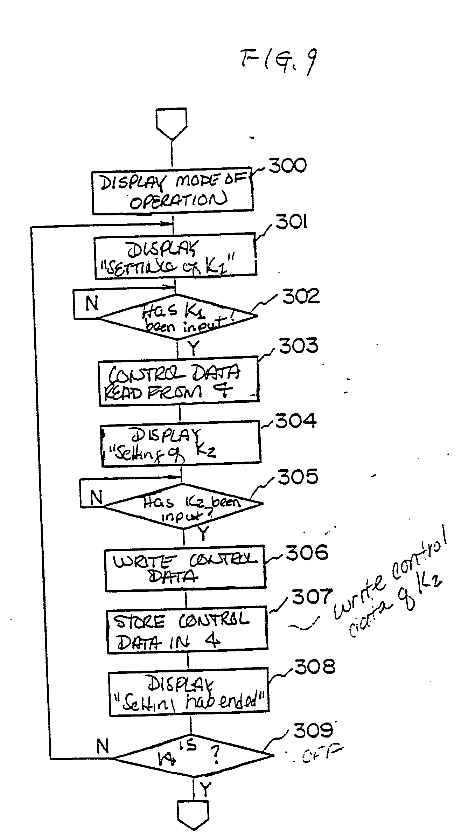

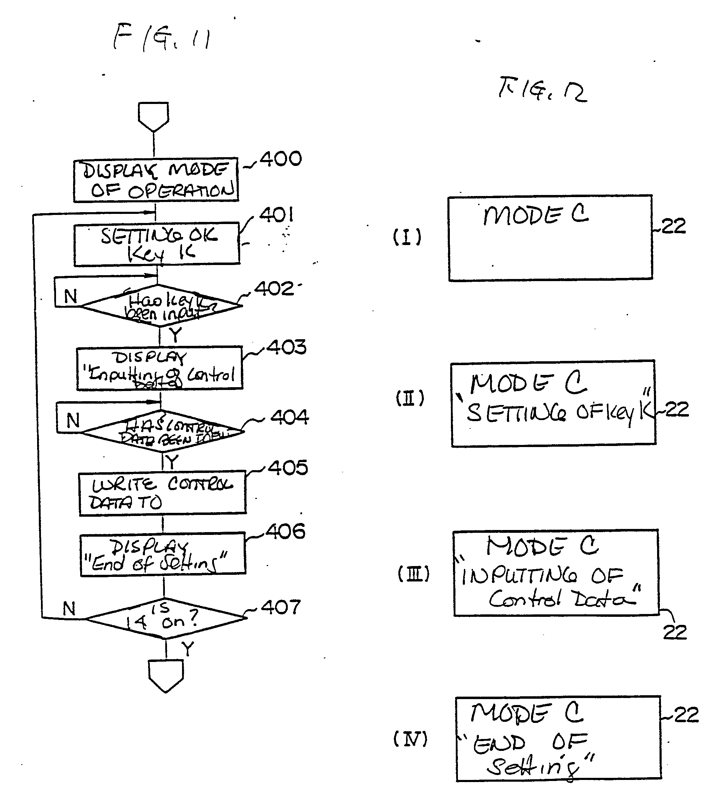

To start with, the fundamental operation will be explained with reference to FIG. 6. Next, the control process of controlling the operations of a plurality of electronic units of manipulating the operation key will be described, referring to FIG. 7. The description will then touch on two examples of key array modifying operations in conjunction with FIGS. 9 and 11.

In FIG. 6, the control unit 30 determines whether the command input unit 14 is turned ON or OFF (100). If input unit 14 is turned OFF, no processing is performed and the processing comes to an end. If turned ON, however, the processing moves to a subsequent step 101, wherein the control unit 30 makes a decision to select and execute the specific processing corresponding to a given key 2 which has been pushed. If no key 2 is pushed even after a predetermined time has passed, the operations of a plurality of electronic units are controlled by manipulating a single operation key among the operation keys 2. If the given key among the operation keys 2 is pushed before the predetermined time passes, there are performed functions to modify the key array depending on the type of key pushed (steps 103 and 104).

Any one of program modes is selected by executing the above-described operations.

(Setting of One Key Operation (Operation of Step 102)

In this program mode, the control units works, and the program mode processing means 20 is actuated. The program mode processing means 20 causes the display unit 22 to display the one key operation setting mode (200). Then, as illustrated in FIG. 8(I), the one key operation setting mode "A" is displayed. This display continues with no change till this mode is varied. Subsequently, the program mode processing means 20 causes the display unit 22 to display "key assignment" to determine the specific key by which a plurality of electronic units are controlled (201). As depicted in FIG. 8(II), "key assignment" is displayed on the display unit 22. A subsequent step is to wait for key inputting (202). When the key is assigned, the physical position of the key 2 is judged preparatory to a step of storing control data in a storage position of the correspondence table 4 which corresponds to that physical position (203). The program mode processing means 20 further causes the display unit 22 to display "control data inputting" in order to input the control data of a transmitting destination device (204). As a result, "control data inputting" is, as illustrated in FIG. 8(III), displayed on the display unit 22. Then, the program mode processing means 20 waits for data to be input (205). The inputting of control data involves (1) a method of effecting the inputting process in the form of code by employing the operation keys 2, (2) a method of effecting the inputting process in terms of function by using the operation keys 2 and (3) a method of inputting the control data sent from the transmitter of other remote control system through the light receiving diode 16a of the data inputting circuit 16. Therefore, after the control data is input in the step 205, the control data is stored in a predetermined area of the correspondence table 4 of the storage device 6 by the program mode processing means 20 (206). It is then determined whether the command inputting unit 14 is turned OFF or ON (207). If turned ON, the processing moves to a step (208). If turned OFF, the processing is terminated. In the step 208, the program. mode processing means 20 determines whether a predetermined storage area of the correspondence table 4 of the storage device 6 is full of data. If full, the processing proceeds to a step 209. If not, the processing returns to the step 205 to set the control data of the next apparatus. In a step 209, the program mode processing means 20 causes the display unit 22 to display, as illustrated in FIG. 8(IV), "incapable of setting", thus terminating the processing.

These operations are performed in this way, and it follows that the setting area of the correspondence table 4 shown in FIG. 2 is stored consecutively with the control data of the first, second and third electronic units in sequence of input.

Therefore, the command inputting unit 14 is turned OFF, and the transmitter of the remote control system is used. At this time, it is possible to control the first, second and third electronic units simply by pushing down any one of operation keys 2.

(Key Array Modifying Operation 1 (Operation of Step 103))

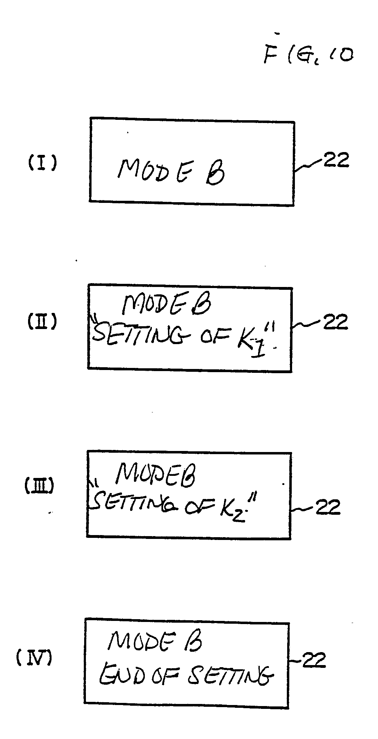

In this program mode, the control unit 30 functions, and the program mode processing means 2 for the key array modifying operation 1 is also actuated. As seen in FIG 9, the program mode processing means 20 first causes the display unit 22 to indicate that the mode is an operation mode of the key array modifying operation 1 (300). As illustrated in FIG. 10(I), an operation mode "B" of the key array modifying operation 1 is displayed. The display continues with no change till the mode is varied.

In the second place, as shown in FIG. 10 (II) the program mode processing means 20 makes the display unit 22 display "setting of key $K_1$". Next the processing waits for key-inputting of the key $K_1$ (302). When the key $K_1$ is assigned, the physical position 'of the key $K_1$ is determined. The control data is read from the area in the storage position of the correspondence table 4 which corresponds to the physical position thereof (303).

The program mode processing means 20 makes the display unit 22 display "setting of key position $K_2$" indicating that the key position $K_2$ is to be set (304). As shown in FIG. 10(III), "setting of key position $K_2$" is displayed thereon. Next the processing waits for key-inputting of the key position $K_2$ (305). When the key position $K_2$ is inputted, the program mode processing means 20 reads the control data that has stored so far, of the correspondence table 4 in the key position $K_2$. Subsequently, the program mode processing means 20 writes the control data (306) read in the step 303. Upon completion of this writing process, the control data red from the key position $K_2$ is stored in the storage area in the key position $K_1$ of the correspondence table 4 (307). The program mode processing means 20 causes the display unit 22 to indicate that the setting has ended (308). Then, as shown in FIG. 10(IV), "end of setting" is displayed on the display unit 22.

The next step is to determine whether the command inputting unit 14 is turned OFF or ON (309). If turned OFF, the processing comes to an end. If turned ON, the processing goes back to step 301.

The operations are thus carried out, and hence the specific key K1 can be changed over to the position $K_2$. In this embodiment, the key is in the position $K_1$ before being shifted. In accordance with the present invention, however, there are other methods of permitting the key to move to other positions that may be utilized.

(Key Array Modifying Operation 2 (Operation of Step 104))

In this program mode, the control unit 30 works, and the program mode processing means 20 of the key array modifying operation 2 is also actuated. To begin with, the program mode processing means 20 makes the display unit 22 indicate that the mode is an operation mode of the key array modifying operation 2 (400). As illustrated in FIG. 12(I), an operation mode "C" of the key array modifying operation 2 is displayed. This display continues without being changed till this mode is varied.

Next, the program mode processing means 20 causes the display unit 22 to display "setting of key K" indicating that the key K is to be set (401). Then, as illustrated in FIG. 12(II), "setting of key K" is displayed on the display unit 22. A subsequent step is to wait for key-inputting of the key K (402). When the key K is assigned, a physical position of the K is judged preparatory to a step of writing the control data to the area in the storage position of the correspondence table 4 which corresponds to the physical position thereof. More specifically, the program mode processing mean 20 functions to make the display unit 22 indicate "inputting of control data" showing that the control data of the key to be modified is inputted (403). Consequently, as illustrated in FIG.(III), "inputting of control data" is displayed on the display unit 22. What is done next is to wait for the control data being inputted (404). When the control data is inputted by manipulating the operation keys, the control data is written to the storage area of the correspondence table 4 (405) in a position of the operation key 2 is assigned to the step 403. The program mode processing means 20 causes the display unit 22 to indicate that the setting has been finished (406). As shown in FIG. 12(IV), "end of setting" is displayed on the display unit 22.

A subsequent step is to judge whether the command inputting unit 14 is turned OFF or ON 407). If turned OFF, the processing is terminated. If turned ON, the processing returns to the step 401.

Since the operations are thus performed, it is feasible to change over the given key K to the predetermined control data. This implies a changeover to the operation key 2 capable of processing the control data.

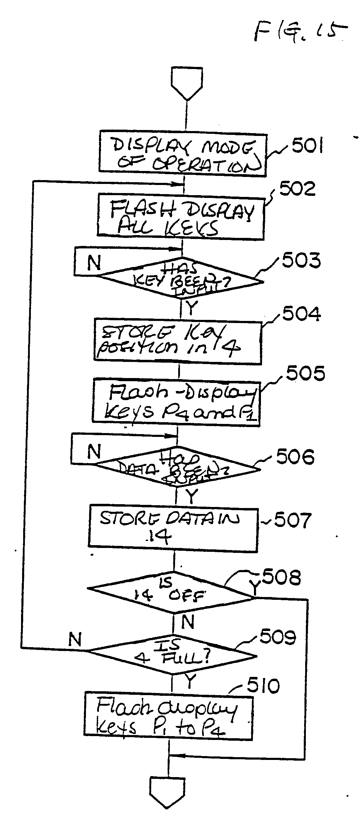

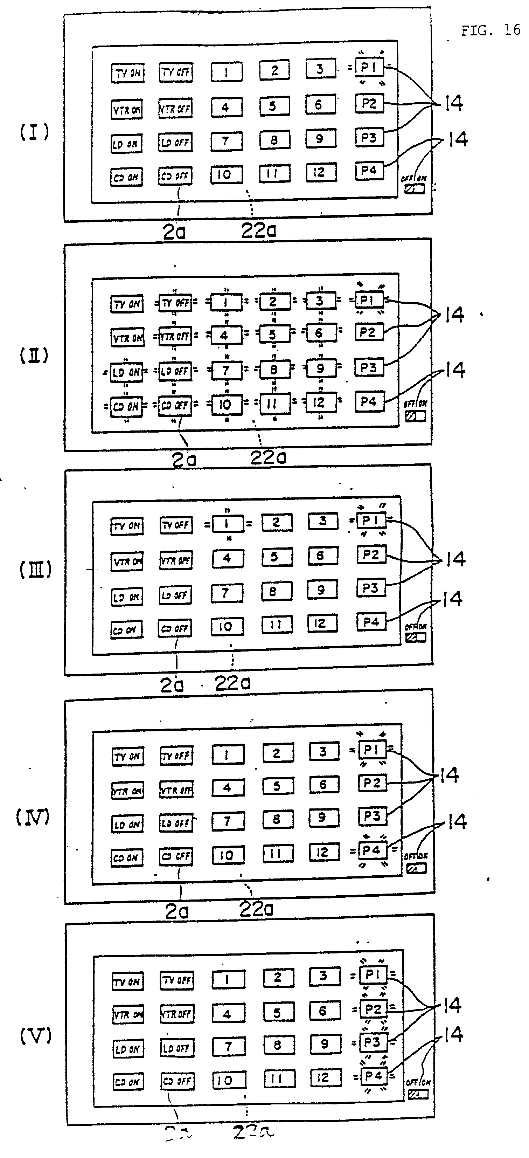

The constitution for signal processing in the second embodiment shown in Fig. 14 and Fig. 16 is fundamentally similar to that shown in Figs 1 to 3. One big difference is the external appearance. Namely, the difference in the signal processing constitution between this embodiment may be found in a touch panel of which the operation keys 2 are formed. No change can be seen in other components. In this embodiment, as illustrated in FIG. 14, a liquid crystal display plate 22a is provided as the display unit 22 beneath the touch panel 2a; and side surfaces thereof are formed with windows 26 and 28, though these windows are not shown in the Figure.

The fundamental operation of this embodiment is the same as shown in FIG. 6, and the explanation is therefore omitted herein.

(Setting of Key Operation (Operation of Step 102))

In this program mode, the control unit 30 works, and the program mode processing means 20 for setting the key operation is also actuated. The program mode processing means 20 causes the display unit 22 to indicate that the mode is a key operation setting mode (501) (see Fig. 15). As shown in FIG. 16(I), a key operation setting mode "$P_1$" is flash-displayed. The on-and-off display continues with no change till this mode is varied.

In order to determine the specific key by which a plurality of electronic devices are controlled, the program mode processing means 20 causes the display unit 22 to flash-display all the keys at a different cycles excluding the keys $P_1$ to $P_4$. The next step is to wait for the key inputting (503). At this time, when assigned the key, a physical position of the key 2 is judged preparatory to the step of storing in table 4 data which corresponds to this physical position (504). At this time, the assigned key alone is, as shown in FIG. 16(III), flash-displayed.

For the purpose of inputting the control data of transmitting destination device, the program mode processing means 20 causes the display unit 22 to flash-display the key $P_4$ together with the $P_1$ among the operation keys 2 (505). Consequently, both the key $P_1$ and the key $P_4$ are, as illustrated in FIG. 16(III), flash-displayed. Then the program mode processing means 20 waits for the data-inputting (506). The inputting of the control data is the same as that in the first embodiment, and hence the description is omitted. Upon an input of the control data in the step 506, the control data is stored in a predetermined area of the correspondence table 4 of the storage device 6 by use of the program mode processing means 20 (507). A subsequent step is to judge whether the command inputting unit 14 is turned OFF or ON. If turned ON, the processing moves to a step 509. If turned OFF, the processing comes to an end (508). In the step 509, the program mode processing means 20 judges whether a predetermined storage area of the correspondence table 4 of the storage device 6 is full of data or not. If full, the processing proceeds to a step 510. If not, the processing returns to step 502 to set the control data of the next apparatus. In the step 510, as shown in FIG. 16(V), the program mode processing means 20 causes the display unit 22 to flash-display all the keys $P_1$ to $P_4$ among the operation keys 2, thus finishing the processing.

By virtue of such operations, the present area of the correspondence table 4 shown in FIG. 2 is stored consecutively with the control data of the first, second and third electronic devices in sequence of input.

Therefore, when the command inputting unit 14 is turned OFF and the transmitter of the remote control system is going to be used, the first, second and third electronic devices can be controlled simply by pushing down any one of the operation keys 2.

(Key Array Modifying Operation 1 (Operation of Step 103))

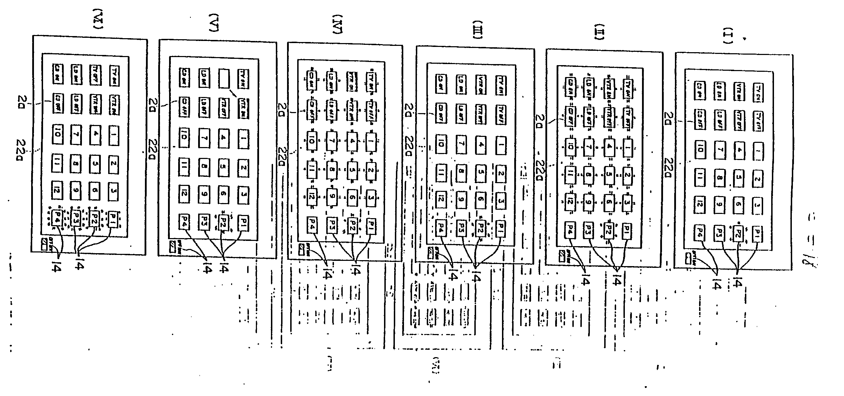

In this program mode, the control unit 30 functions, and the program mode processing means 20 of the key array modifying operation is also actuated. The program mode processing means 20 at first makes the display unit 22 indicate that the mode is an operation mode of the key array modifying operation 1 (600). As is shown in FIG. 18(I), the key $P_2$ among the operation keys 2 in the operation mode of the key array modifying operation 1 is flash-displayed. The display remains as it is without being changed till the mode is varied.

Next, in order to set the key $K_1$ to be modified, program mode processing means 20 causes the display unit 22 to flash-display all the keys excluding the keys $P_1$ through $P_4$ among the operation keys 2-at a different cycle from that of the key $P_2$ - (601). All the keys except the keys $P_1$ through $P_4$ among the operation keys 2 are, as depicted in FIG. 18(II), flash-displayed on the display unit 22 and it follows that the program mode processing means 20 waits for key-inputting of the key $K_1$ - (602). When the key $K_1$ is assigned, the physical position of the key $K_1$ is judged. The control data is read from an area in the storage position of the correspondence table 4 which corresponds to the physical position. The key $K_1$ is indicated by e.g., a black-off character, and the on-and-off display of the operation keys 2 ceases (603). Then the appearance on the display unit 22 is depicted in FIG. 18(III).

With the intention of setting the key position $K_2$ to be modified, the program mode processing means 20 causes the display unit 22 to flash-display all the keys excluding the keys $P_1$ to $P_4$ and also the key $K_1$ indicated by the black-off character among the operation keys 2 at a different cycle from that of the key $P_2$ (604). As shown in FIG. 18(IV), the display unit 22 then flash-displays all the keys except the keys $P_1$ to $P_4$ and the key K1 drawn with the black-off character among the operation keys 2 at the different cycle from that of the key $P_2$. The program mode processing means 20 waits for the inputting of the key in the key position $K_2$ (605). When the key position $K_2$ is

inputted, the program mode processing means 20 reads the control data which has been stored so far in the storage area of the correspondence table 4 which corresponds to the key position $K_2$, then writes the control data read in the step 603 to the storage area of the correspondence table 4. Simultaneously, the on-and-off display of the operation keys 2 and the black-off display of the key $K_1$ are stopped. Instead, the key position $K_2$ is displayed with the black-off character (606). After these processes have been done, the control data read from the key position $K_2$ is stored in the storage area in the position of the $K_1$ of the correspondence table 4 (607). The program mode processing means 20 makes the display unit 22 indicate that the setting has been finished (608). As depicted in FIG. 18(VI), the display unit 22 flash-displays all the keys $P_1$ through $P_4$ among the operation keys 2 at a different cycle from that when the setting is unpracticable during a given period. After the on-and-off display has come to an end, the black-off display of the key position $K_2$ is halted. Then there is given the information that the setting has been finished.

Then, it is determined whether the command inputting unit 14 is turned OFF or ON. If turned OFF, the processing is terminated. If turned ON, the processing returns (609) to the step 601.

Since these operations are effected in the above-described manner, a given key $K_1$ can be changed over to the position $K_2$ before being shifted. In accordance with the present invention, the distinction is not confined to this position. There may, however, be adopted other ways to permit the shift to some other positions.

It is to be noted that the key array modifying operation 2 (operation of step 104) can be attained on the basis of the on-and-off display described above.

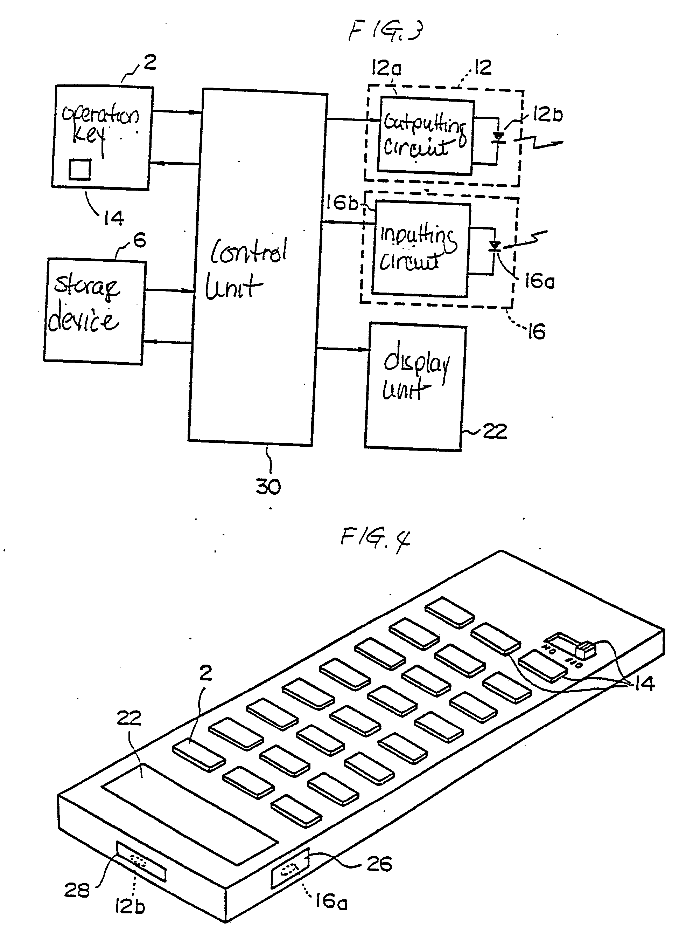

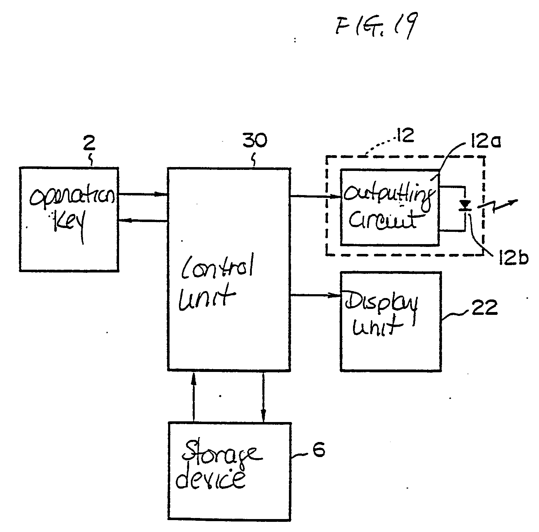

Turning attention to FIG. 19, there is illustrated still another embodiment. A different situation from that shown in FIG. 3 is that the inputting unit 18 is composed simply of the operation keys 2. Based on this embodiment, the number of manufacturing processes decreases, the construction is facilitated by of eliminating the processing means, although it is unfeasible to directly fetch and set the transmission codes from the transmitter of other remote control system. As a result, the transmitter can advantageously be provided at a low cost.

In the embodiment described above, the command inputting unit 14 is set by pushing down the specific key among the operation keys 2 in cooperation with the program mode switch. The arrangement is not limited to this one. The program mode switches may be provided, corresponding to the program mode to be processed; or alternatively the program mode display on the display unit 22 may be varied by continuously pushing down the single program mode switch.

In this embodiment described above, the user is allowed to modify the array of operation keys for easier operation thereof, and the plurality of electronic devices can be controlled by the single key. By virtue of these advantages, the operation of the transmitter can be remarkably facilitated, the transmitter can be miniaturized in outer configuration despite the plurality of electronic devices to be controlled.

In the present invention, the user can modify the array of operation keys to obtain easier manipulation. The plurality of electronic devices can be controlled by the single key, thereby considerably facilitating the use of transmitter. Besides, the transmitter can be smaller in spite of the fact that the plurality of electronic devices can be controlled.

While the invention has been described in connection with what is presently considered to be the most practical and preferred embodiments, it is to be understood that the invention is not limited to the disclosed embodiment but, on the contrary is intended to cover various modifications and equivalent arrangements included within the spirit and scope of the appended claims.

## Claims

1. A transmitter for a remote control system for controlling a plurality of operations on a plurality of electronic devices, said transmitter comprising:
an external input means (18) for generating a selection signal in response to user manipulation thereof;
a storage means (6) for storing information linking said selection signal to information relating to a plurality of operations on a plurality of electronic devices;
a control means (30) for receiving said selection signal and retrieving said stored information and generating a transmission signal corresponding to the selected operation on the selected electronic device; and
outputting means (12) for outputting a remote control signal directed to the selected electronic device for the selected operation in response to said transmission signal.

2. A transmitter as in claim 1 wherein said external input unit (18) includes a set of operation keys (2) which are disposed to be pushed by the user.

3. A transmitter as in claim 1 or 2 wherein said control means (30) further comprises means for outputting a display signal and said transmitter further comprises a display unit (22) for displaying messages in response to receipt of said display signal.

4. A transmitter as in one of the preceding claims wherein said storage means (6) includes a correspondence table ( 4) which contains the information linking the physical position of said operation keys (2) to a particular operation on a particular electronic device.

5. A transmitter as in one of the preceding claims wherein said remote control signal is an optical signal.

6. A transmitter as in one of the preceding claims further comprising a data input circuit means (16), responsive to an outside signal, for transmitting a selection signal to said control means (30).

7. A transmitter as in one of the preceding claims wherein said outside signal is an optical signal.

8. A transmitter as in one of the preceding claims, wherein said control means (30) includes a program mode processing means (20) for modifying the information on said correspondence table (4) in response to said selection signal.

9. A transmitter as in one of the preceding claims further comprising a command input means (14) for actuating said transmitter.

10. A transmitter as in one of the preceding claims wherein said control means comprises:
a signal processing means for receiving said selection signal and retrieving said stored information and outputting a key correspondence information signal; and
transmission code generating means for receiving said key correspondence information signal and outputting a transmission code in response to said outputting means.

11. A method of remotely controlling a plurality of operations on a plurality of electronic devices, said method comprising the steps of:
generating a selection signal in response to user manipulation of an external input unit;
storing information on a correspondence table linking selection signals to particular operations on particular electronic devices;
generating a transmission signal in response to said selection signal and said stored information; and
transmitting a remote control signal in response to said transmission signal.

12. A method as in claim 1 wherein said selection signal generating step includes a step of pushing a selected key on the external input unit.

13. A method as in claim 11 or 12, further comprising the steps of:

outputting a display signal to a display device; and

displaying a message corresponding to said display signal on said display device.

14. A method as in one of claims 11 to 13, further comprising the steps of linking the physical position of said operation key in said correspondence table to a particular operation on a particular electronic device.

15. A method as in one of claims 11 to 14, further comprising the steps of:

transmitting an outside selection signal to an input circuit means; and

generating a transmission signal in response to said outside selection signal and said stored information.

16. A method as in one of claims 11 to 15 further comprising the step of modifying the information on said correspondence table in response to said selection signal.

FIG. 1

FIG. 2

| (a) Physical position of key | (b) Storing Order 1 | (c) Storing Order 2 | (d) Storing Order 3 |
|---|---|---|---|
| "11" | $S_{D1}$ | — | — |
| "12" | $S_{D2}$ | $S_{D3}$ | $S_{D4}$ |
| ⋮ | ⋮ | ⋮ | ⋮ |
| "MN" | $S_{Dm}$ | — | — |

4a          4b

FIG. 3

2
operation key

14

6
storage device

Control Unit

30

12a    12
Outputting circuit    12b

16b
inputting circuit
16a
16

display unit

22

FIG. 4

22

2

14

26

28    16a

12b

FIG. 5

FIG. 6

Flowchart:

100 — Is input unit 14 on? — N / Y

101 — Has key 1 or 2 been pressed — N / "1" / "2"

102 — Processing of single key operation

103 — Processing of key operation 1

104 — Processing of key operation 2

F I G. 7

Flowchart:

- Key operation setting mode displayed — 200
- Display Key assignment — 201
- Is there a key inputted? — 202 (N / Y)
- STORE DATA IN CORRESPONDENCE TABLE — 203
- DISPLAY "Control Data Inputting" — 204
- HAS control DATA BEEN inputted — 205 (N / Y)
- CONTROL DATA STORED IN 4 — 206
- Is command Unit 14 OFF? — 207 (Y / N)
- Is storage area full? — 208 (N / Y)
- DISPLAY "Incapable of setting" — 209

F/G. 8

(I)

MODE A

22

(II)

MODE A
"Key assignment"

22

III

MODE A
"INPUT OF CONTROL
DATA"

22

(IV)

MODE A
"INCAPABLE OF
SETTING"

22

FIG. 9

```
        ┌─────────────────┐
        │ DISPLAY MODE OF │──── 300
        │   OPERATION     │
        └─────────────────┘
        ┌─────────────────┐
        │    DISPLAY      │──── 301
        │ "SETTING of K₁" │
        └─────────────────┘
    ┌──────◇◇◇────────┐
 N ─│   Has K₁        │──── 302
    │  been input?    │
    └──────◇◇◇────────┘
         Y
        ┌─────────────────┐
        │ CONTROL DATA    │──── 303
        │ READ FROM 4     │
        └─────────────────┘
        ┌─────────────────┐
        │    DISPLAY      │──── 304
        │ "Setting of K₂  │
        └─────────────────┘
    ┌──────◇◇◇────────┐
 N ─│  Has K₂ been    │──── 305
    │    input?       │
    └──────◇◇◇────────┘
         Y
        ┌─────────────────┐
        │ WRITE CONTROL   │──── 306
        │     DATA        │
        └─────────────────┘
        ┌─────────────────┐
        │ STORE CONTROL   │──── 307
        │  DATA IN 4      │
        └─────────────────┘
        ┌─────────────────┐
        │    DISPLAY      │──── 308
        │ "Setting has ended" │
        └─────────────────┘
    ┌──────◇◇◇────────┐
 N ─│    K₃ is ?      │──── 309
    │                 │       OFF
    └──────◇◇◇────────┘
         Y
```

write control data of K₂

FIG. 10

(I)

| MODE B | ~22 |

(II)

| MODE B "SETTING OF $K_1$" | ~22 |

(III)

| "MODE B SETTING OF $K_2$" | ~22 |

(IV)

| MODE B END OF SETTING | ~22 |

# FIG. 11

```
        ┌──────────────┐
        │ DISPLAY MODE │ ～400
        │ OF OPERATION │
        └──────────────┘
        ┌──────────────┐
        │  SETTING OK  │ ～401
        │    Key K     │
        └──────────────┘
     N    ╱╲
   ◄─────╱ Has key K ╲～402
         ╲ been input ╱
           ╲_____╱
              │ Y
        ┌──────────────┐
        │   DISPLAY    │ ～403
        │"Inputting of Control
        │    Data"     │
        └──────────────┘
     N    ╱╲
   ◄─────╱ HAS Control ╲～404
         ╲ Data BEEN input ╱
           ╲_____╱
              │ Y
        ┌──────────────┐
        │ WRITE Control│ ～405
        │   DATA TO    │
        └──────────────┘
        ┌──────────────┐
        │   DISPLAY    │ ～406
        │"End of Setting"│
        └──────────────┘
     N    ╱╲
   ◄─────╱ IS      ╲～407
         ╲ 14 on ? ╱
           ╲_____╱
              │ Y
```

# FIG. 12

(I)
┌────────────────────┐
│      MODE C        │ ～22
│                    │
└────────────────────┘

(II)
┌────────────────────┐
│  MODE C            │
│ "SETTING OF Key K" │ ～22
└────────────────────┘

(III)
┌────────────────────┐
│     MODE C         │
│ "INPUTTING OF      │
│  Control Data"     │
└────────────────────┘ ～22

(IV)
┌────────────────────┐
│    MODE C          │ ～22
│ "END OF            │
│    Setting"        │
└────────────────────┘

## FIG. 13

| TV ON | TV OFF | 1 | 2 | 3 | P1 |
| VTR ON | VTR OFF | 4 | 5 | 6 | P2 |
| LD ON | LD OFF | 7 | 8 | 9 | P3 |
| CD ON | CD OFF | 10 | 11 | 12 | P4 |

14

14

2a    22a

OFF | ON

program (a) mode switch

## FIG. 14

2    2a

22    22a

FIG. 15

```
           ┌─────────────────┐
           │ DISPLAY MODE    │  501
           │ OF OPERATION    │
           └────────┬────────┘
                    │
           ┌────────┴────────┐
           │ FLASH DISPLAY   │  502
           │ ALL KEYS        │
           └────────┬────────┘
                    │
      N      ◇ HAS            ◇  503
        ───── KEY BEEN
             ◇ INPUT?        ◇
                    │ Y
           ┌────────┴────────┐
           │ STORE KEY       │  504
           │ POSITION IN 14  │
           └────────┬────────┘
                    │
           ┌────────┴────────┐
           │ Flash-Display   │  505
           │ Keys P4 and P1  │
           └────────┬────────┘
                    │
      N      ◇ HAD            ◇  506
        ───── DATA BEEN
             ◇ ENTER?        ◇
                    │ Y
           ┌────────┴────────┐
           │ STORE DATA IN   │  507
           │ 14              │
           └────────┬────────┘
                    │
             ◇ IS            ◇ Y  508
             ◇ 14 OFF        ◇──────
                    │ N
      N      ◇ IS            ◇  509
        ───── 4 FULL?
             ◇               ◇
                    │ Y
           ┌────────┴────────┐
           │ Flash display   │  510
           │ Keys P1 to P4   │
           └────────┬────────┘
                    │
```

FIG. 16

(I)

(II)

(III)

(IV)

(V)

FIG. 17

```
              ▽
        ┌──────────────────┐
        │ OPERATION MODE   │── 600
        └──────────────────┘
   ┌────────►
   │    ┌──────────────────┐
   │    │ Flash all keys   │── 601
   │    │ except P₁ - P₄   │
   │    └──────────────────┘
   │       ┌──────────►
   │    N ◄─────────╲
   │      ╱   Had     ╲── 602
   │      ╲ Key K₁ been╱
   │       ╲  input   ╱
   │          ╲──╱
   │            │ Y
   │    ┌──────────────────┐
   │    │ Display K₁.      │── 603
   │    └──────────────────┘
   │
   │    ┌──────────────────┐
   │    │ Flash display all│── 604
   │    │ keys except K₁and P₁-P₄│
   │    └──────────────────┘
   │       ┌──────────►
   │    N ◄─────────╲
   │      ╱   Had K₂  ╲── 605
   │      ╲ been input ╱
   │       ╲         ╱
   │          ╲──╱
   │            │ Y
   │    ┌──────────────────┐
   │    │ Display position g│── 606
   │    │ K₂ with black-off │
   │    │ character        │
   │    └──────────────────┘
   │    ┌──────────────────┐
   │    │ Store control    │── 607
   │    │ data in 4        │
   │    └──────────────────┘
   │    ┌──────────────────┐
   │    │ Display "setting │── 608
   │    │ Finished"        │
   │    └──────────────────┘
   │    N ◄─────────╲
   └──────╱   IS     ╲── 609
          ╲  14 off? ╱
           ╲        ╱
              ╲──╱
                │ Y
               ▽
```

FIG. 19